**Europäisches Patentamt**

**European Patent Office**

**Office européen des brevets**

(11) Publication number: **0 151 501**

**A2**

(12) # EUROPEAN PATENT APPLICATION

(21) Application number: **85200125.4**

(22) Date of filing: **06.02.85**

(51) Int. Cl.⁴: **H 05 B 3/36**
**H 05 B 3/56**

(30) Priority: **09.02.84 NL 8400410**

(43) Date of publication of application:
**14.08.85 Bulletin 85/33**

(84) Designated Contracting States:
**AT BE CH DE FR GB IT LI LU NL SE**

(71) Applicant: **Koninklijke Fabriek Inventum Fabriek van Instrumenten en Electrische Apparaten N.V.**
**Leijenseweg 101 P.O. Box 4**
**NL-3720 AA Bilthoven(NL)**

(72) Inventor: **van der Wansem, Pieter Johan**
**Nassaulaan 31**
**NL-3761 BS Soest(NL)**

(74) Representative: **Noz, Franciscus Xaverius, Ir. et al,**
**Algemeen Octrooibureau P.O. Box 645**
**NL-5600 AP Eindhoven(NL)**

(54) **Method and device for arranging a wire-shaped element in a given pattern between layers of material or webs of material.**

(57) A method of arranging a wire-shaped element in a given pattern between layers of material whereby are glue and the wire-shaped element in the given pattern a carrier layer applied to, in that the carrier layer is provided on the bottom and top sides with an outer layer and in that the assembly is finished.

*FIG.1.*

EP 0 151 501 A2

-1-

Method and device for arranging a wire-shaped element in a given pattern between layers of material and strips or webs of material, respectively, particularly for use in the manufacture of electrically heated objects such as blankets and cushions in which the wire-shaped element is a heating cable.

The invention relates to a method of arranging a wire-shaped element in a given pattern between layers of material and to a device for arranging a wire-shaped element in a given pattern between strips of material.

It is known to arrange a wire-shaped element between layers of material by weaving or lacing, in particular, a heating cable in the manufacture of, for example, electric blankets.

A disadvantage of this known method is that it is circuitous and cannot be automated or only with difficulty.

The invention has for its object to obviate said disadvantages and provides to this end a method of the kind set forth in the preamble which is characterized in that glue and the wire-shaped element in the given pattern are applied to a carrier layer, in that the carrier layer is provided on the bottom and top sides with an outer layer and in that the assembly is finished.

The finishing operation may consist, for example, of highfrequency sealing or gluing.

According to a further aspect the method embodying the invention is characterized in that the finishing operation includes sewing.

The advantage of sewing is that there is a free choice of the material of the outer layers and also of the thickness of the carrier layer and of any coating to be applied thereto; the first-mentioned layers may consist of cloth and the last-mentioned layers may be foam layers, which determine the performance of the blanket.

For the same, above-mentioned object the invention furthermore provides a device of the kind set forth in the preamble which is characterized in that it comprises a first supporting member for holding in an unwindable manner a first roll of strip material, a transport member for winding off and transporting the strip of material from the first roll in a given direction, at least one gluing member for applying, glue to a surface of the transported first strip of material facing said gluing member and/or the wire-shaped element an element applying, member for applying the wire-shaped element in a given pattern to a surface of the transported first strip of material facing said element applying member, the at least one gluing member and the element applying member being arranged on the same side of the first strip of material, a second supporting member for holding in an unwindable manner a second roll of strip-shaped material and for guiding the strip of material of the second roll onto the first strip of material provided with glue and the wire-shaped element and a winding-up member for winding up the strip of material thus composed on a third roll.

The above-described device provides a semi-product, i.e. a roll of composite, strip-shaped material consisting of a first strip of material having glued to it a wire-like element in a given pattern, the pattern being repeated in a direction of length on the first strip of material and being sandwiched between the first and the second strip of material. If desired, this composite semi-product may be wound up or cut to length and delivered.

For a further processing of the semi-product the device embodying the invention is characterized in that it furthermore comprises a third supporting member for holding in an unwindable manner a fourth roll of strip-shaped material, a second transport member for winding off and transporting the strip-shaped material of the fourth roll in a given direction and a fourth supporting member for holding in an unwindable manner the third roll of composite material and for guiding the third composite strip of material onto the fourth strip of material, after which the strip of material thus composed together with a fifth strip of material wound off on the former is fed to a finishing machine.

Preferably the finishing machine is a multi-needle sewing machine for the same reasons as mentioned above. In order to prevent the needles from coming into contact with the wire pattern, the multi-needle sewing machine can be controlled by reading signs or marks corresponding to the wire pattern. Preferably the signs are applied by the applying member to the first strip of material when the wire-like element is applied.

The invention thus permits of automating the production process, whilst there is a freedom in choosing the materials and variation thereof and thus freedom in determining the performance and appearance of the final products. At the same time the wire-like element is protected against damage during the sewing operation.

The invention will now be described more fully with reference to an embodiment shown in the drawing, in which

Fig. 1 shows a first part of the device embodying the invention for producing the above-mentioned semi-product and

Fig. 2 shows a further part of the device embodying the invention for producing a final product or a further semi-product.

The following description of the invention is directed to the manufacture of electric blankets, though in principle the invention is not limited thereto and can, in general, be applied for arranging a wire-like element in a given pattern between layers of material. In the case of an electric blanket the wire-like element is a heating cable.

In accordance with the invention the heating cable is glued in a given pattern, in particular a loop-shaped pattern to a first layer of material. This can be performed in various ways; for example the glue can first be applied to a carrier layer, after which the heating cable is arranged thereon in the loop-shaped pattern. Of course, several heating cables may be provided. Alternatively the heating cable may be first arranged in place after which the glue is applied, or the heating cable and the glue may be applied simultaneously or a heating cable already provided with glue may be applied to the carrier layer which may have been selectively provided with glue. A coating layer can then be applied to and pressed together with the carrier layer provided with glue and the heating cable. The glue may be applied selectively, for example it may be sprayed in the pattern of the heating cable, after which the heating cable is applied to the glue pattern. All these operations can be manually performed.

The resultant semi-product with the composite layer of material and the heating cable arranged in the desired pattern can then be finished by applying an outer layer to the bottom and top sides, which layer can be high-frequency sealed as far as the material allows or the layers may be needled, glued or sewn. Sewing is preferred because then all materials to be used can be freely chosen i.e. the thickness of the carrier and coating layers, which may be made from foam and the material of the outer layers. This may also be manually performed. It is noted that all layers of material can have the dimensions corresponding with those of an electric blanket or the semi-product with the finished outer layers can be separated from a strip or web of material.

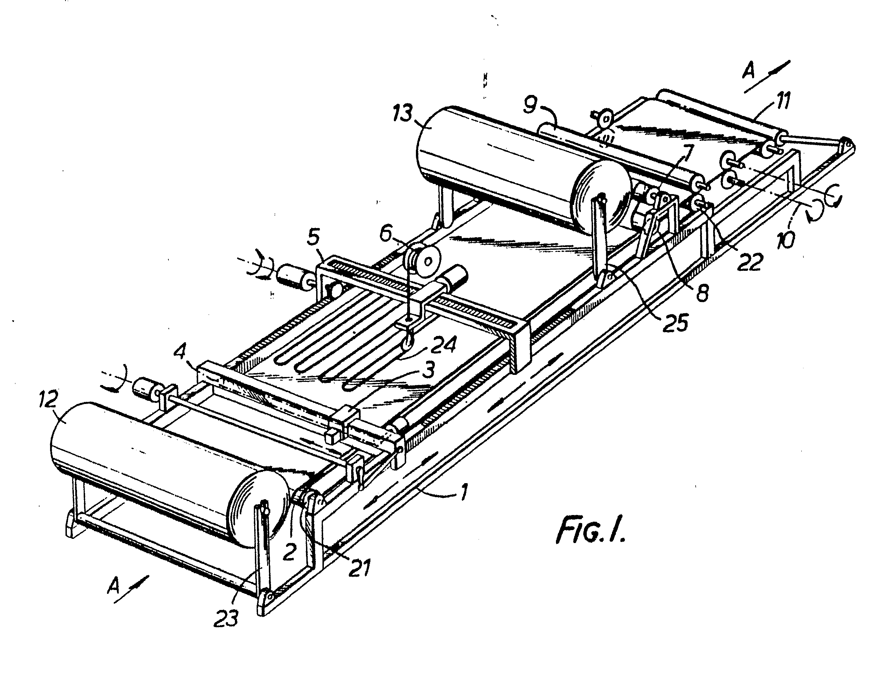

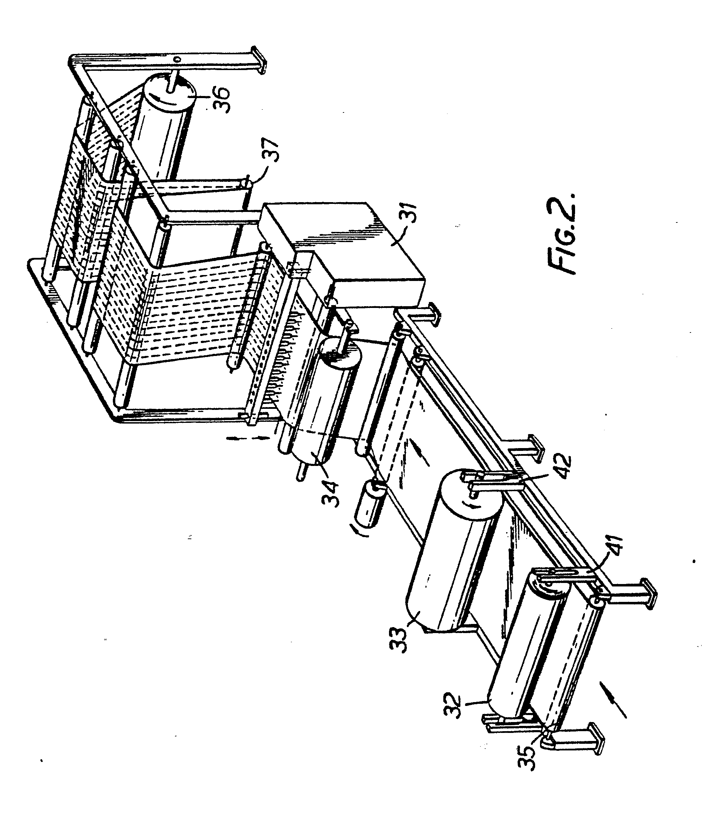

Preferably the operations are performed mechanically, in particular fully automatically. This can be achieved by means of the embodiments of the invention shown in Figs. 1 and 2.

For convenience the part of the device embodying the invention shown in Fig. 1 is termed the wire applying machine and the part of the device embodying the invention shown in Fig. 2 the feeding and multi-needle sewing machine.

Referring to Fig. 1, reference numeral 1 designates the main frame of the wire applying machine and reference numeral 2 designates a conveyor belt passing around the rollers 21 and 22, the drive not being shown in the drawing. Reference numeral 23 designates a supporting member holding in an unwindable manner a first roll 12 of strip-shaped material. The roll 12 is supported by the supporting member 23 in a manner such that the transport member, in this case the conveyor belt 2 can wind off the strip-shaped material from the roll 12 and convey it in the direction indicated by the arrows A. Reference numeral 3 designates places of a hot-melt spraying device controlled by the position of the hot-melt spraying device relative to the driving mechanism 4 in order to apply a suitable glue pattern to the strip of material of the first roll. After the gluing device is arranged in the transport direction a numerically controlled mechanism for applying the wire in the X and Y directions. This mechanism is termed the element or wire applying member hereinafter. The wire applying member 5 is provided with a wire depositing mechanism including, as the case may be, a hot-melt device for the heating cable, the winding-off being numerically controlled. The heating cable is designated by reference numeral 24. Reference numeral 25 designates a second supporting member for holding in an unwindable manner a second roll 13 of strip-shaped material. There are furthermore provided a winding-

- 1 -

CLAIMS

1.     A method of arranging a wire-shaped element in a given pattern between layers of material characterized in that are glue and the wire-shaped element in the given pattern a carrier layer applied to, in that the carrier layer is provided on the bottom and top sides with an outer layer and in that the assembly is finished.

2.     A method as claimed in Claim 1 characterized in that glue is applied in a given pattern to the carrier layer, said glue pattern corresponding with the wire pattern.

3.     A method as claimed in Claim 1 or 2 characterized in that the glue is applied to the wire-shaped element before the wire-shaped element is deposited on the carrier layer.

4.     A method as claimed in anyone of Claims 1 to 3 characterized in that before applying the outer layers to the carrier layer a coating layer is applied to the side provided with glue and the wire-shaped element.

5.     A method as claimed in Claim 4 characterized in that before applying the outer layers the coating layer is pressed onto the carrier layer.

6.     A method as claimed in anyone of the preceding Claims characterized in that the finishing operation includes sewing.

7.     A method as claimed in anyone of the preceding Claims characterized in that it is used for the manufacture of electrically heated objects such as blankets and cushions, in which the wire-shaped element is a heating cable.

8.     A method as claimed in Claim 7 characterized in that the carrier layer and/or the coating layer are made from foam and the outer layers are made from cloth.

9.     A device for arranging a wire-shaped element in a given pattern between layers of material characterized in that it comprises a first supporting member for holding in an unwindable manner a first roll of strip material, a transport member for winding off and transporting the strip-shaped material from the first roll in a given direction, at least one gluing member for applying glue to a surface of the transported first strip of material facing said gluiing member and/or to the wire-shaped element, an element applying member for applying the wire-shaped element in a given pattern to a surface of the transported first strip of material facing said element applying member, the at least one gluing member and the element applying member being arranged on the same side of the first strip of material, a second supporting member for holding in an unwindable manner a second roll of strip-shaped material and for guiding the strip of material of the second roll onto the first strip of material provided with glue and the wire-shaped element and a winding-up member for winding up the strip of material thus composed on a third roll.

10. A device as claimed in Claim 9 characterized in that the transport member is intermittently driven and in that the at least one gluing member and the element applying member can be switched on only at a standstill of the transport member.

11. A device as claimed in Claim 9 or 10 characterized in that the at least one gluing member is a hot-melt glue spraying member.

12. A device as claimed in anyone of Claims 9 to 11 characterized in that the element applying member is numerically controlled.

13. A device as claimed in anyone of Claims 9 to 12 characterized in that between the second supporting member and the winding-up member a compressing member is arranged for pressing the second strip of material onto the first.

14. A device as claimed in anyone of Claims 9 to 13 characterized in that it furthermore comprises a third supporting member for holding in an unwindable manner a fourth roll of strip-shaped material, a second transport member for winding off and transporting the strip-shaped material of the fourth roll in a given direction and a fourth supporting member for holding in an unwindable manner the third roll of composite material and for guiding the third composite strip of material onto the fourth strip of material, after which the strip of material thus composed together with a fifth strip of material wound off on the former is fed to a finishing machine.

15. A device as claimed in Claim 14 characteirzed in that the

- 3 -                           **0151501**

finishing machine is a multi-needle sewing machine.

16.       A device as claimed in Claim 15 characterized in that the multi-needle sewing machine is controlled by reading signs applied in accordance with the wire pattern.

17.       A device as claimed in Claim 16 characterized in that the signs are applied by the element applying member to the first strip of material when the wire-shaped element is deposited thereon.

off mechanism 7 and a guiding roller 8, whilst the second supporting member 25 holds the second roll 13 in an unwindable manner, whilst the winding-off mechanism and the guiding roller guide the second roll of strip-shaped material onto the first strip of material provided with glue and the wire-like element. Reference numeral 11 designates a winding-up roller for the composite layers of material. Reference numeral 9 designates a set of driven rollers for firmly pressing the second strip of material to the first strip of material with the heating cable between them and reference numeral 10 designates two sets of rolling knives for cutting the composite strip of material to the desired width.

According to the invention the hot-melt spraying device 3 applies a predetermined glue pattern to a first layer of, for example, foam or tissue. Then to this glued layer is applied the heating cable by means of the numerically controlled mechanism 5 in order to obtain the desired loop-shaped pattern of the heating cable; as stated above different orders of succession are also possible. The next step is the application of a second layer of, for example, foam or tissue to the layer formed and the assembly is rolled together and cut at the edges. If desired the assembly can be wound up for being further processed in the part of the device shown in Fig. 2, or it may be directly transported to a finishing device. A further alternative consists of indirectly coupling the wire deposition machine with the multi-needle sewing machine, the semi-product passing with the aid of a loop-shaped buffer through the sewing machine.

The conveyor belt 2 is preferably intermittently driven in accordance with the wiring process.

Referring to Fig. 2, reference numeral 31 designates a multi-needle sewing machine, reference numeral 32 a first bolt of blanket cloth, reference numeral 33 the roll of semi-product obtained from the part of the device of Fig. 1 (corresponding to the winding-up roller 11), reference numeral 34 a second bolt of blanket cloth and reference numeral 35 a conveyor belt for stress-free feeding. Reference numeral 36 designates a winding-up roller, reference numeral 37 a compensator for stress-free sewing, which may furthermore comprise means for cutting the cloth in a transverse direction. According to the invention the second part of the device comprises a multi-needle sewing machine, which may be a standard multi-needle machine enabling casting off and interruption of the sewing path.

The part of the device of Fig. 2 comprises a third supporting member 41 for holding in an unwindable manner a fourth roll of strip-shaped material 32, a second transport member 35 for winding off the fourth strip of material from the roll 32 and for guiding this material in a given direction and a fourth supporting member 42 for holding in an unwindable manner the third roll of composite material and for guiding the third composite strip of material onto the fourth strip of material, after which the strip of material thus composed together with a fifth strip of material from the roll 34 wound on the former is fed to a finishing machine 31.

The multi-needle sewing machine is preferably controlled by reading signs applied in accordance with the wire pattern, which signs are applied by the element applying member 5 during the deposition of the heating cable on the first strip of material. In other words the multi-needle sewing machine is provided with a control-device in which side edges and signals applied by the device of Fig. 1 can operate as control-signals for the sewing pattern to be formed. The feed of cloth, the wire elements and the foam is performed free of stress on the front side of the machine. On the rear side the machine can automatically cut the blanket and festoon the same all around.

The reference numerals (if any) used in the claims are only meant to explain more clearly the intention of the invention and are not supposed to be any restriction concerning the interpretation of the invention.

FIG.1.

FIG.2.

0151501